# EUROPÄISCHE PATENTANMELDUNG

(11) **EP 4 091 444 A1**
(43) Veröffentlichungstag der Anmeldung: **23.11.2022**
(21) Anmeldenummer: 21175311.6
(22) Anmeldetag: 21.05.2021
(51) Int. Cl.: A01M 1/20

(54) **FANGSCHALE FÜR PFLANZENSCHÄDLINGE**

(71) Anmelder: Bayer AG, 51373 Leverkusen (DE)
(72) Erfinder: Tempel, Matthias, 50935 Köln (DE)
(74) Vertreter: BIP Patents

(57) **Zusammenfassung**

Die vorliegende Erfindung betrifft eine Vorrichtung und ein Verfahren zum Immobilisieren von Pflanzenschädlingen zum Zweck der Identifizierung.

## Beschreibung

Die vorliegende Erfindung betrifft eine Vorrichtung und ein Verfahren zum Immobilisieren von Pflanzenschädlingen zum Zweck der Identifizierung.

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Pflanzenwachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht.

In der modernen Landwirtschaft spielen die Erfassung und Erkennung von Schädlingen innerhalb von landwirtschaftlich genutzten Flächen eine wichtige Rolle.

WO2018054767, WO2020058170 und WO2020058175 offenbaren Fangschalen, die mit Wasser und Zusatzstoffen befüllt werden können, um Schädlinge zu immobilisieren.

Gelangen mehrere Schädlinge in die Fangschale, kann es vorkommen, dass diese Schädlinge sich zu einer oder mehreren Gruppen zusammenlagern und gegenseitig verdecken. Die Identifizierung einzelner Schädlinge in solchen Zusammenlagerungen ist häufig schwierig bis unmöglich; die Schädlinge müssen zunächst voneinander getrennt und vereinzelt werden, um sie identifizieren zu können.

Wie in WO2020058170 und WO2020058175 beschrieben können Fangschalen mit einer Kamera ausgestattet sein. Die Kamera ist in einem definierten Abstand über dem Boden der Schale angebracht, so dass ein Abbild des Bodes der Fangschale auf einen Sensor der Kamera geworfen wird. Die Kamera erlaubt eine Prüfung des Inhalts der Fangschale aus der Ferne. Die mittels einer solchen Kamera aufgenommenen Bilder können (automatisiert) analysiert werden, um Schädlinge zu detektieren, zu zählen und/oder zu identifizieren. Allerdings ist eine solche (automatisierte) Analyse aller einzelnen Schädlinge aus der Ferne nicht möglich, wenn die Schädlinge in einer oder in mehreren Gruppen zusammengelagert sind.

Ausgehend vom beschriebenen Stand der Technik stellt sich damit die technische Aufgabe, eine Zusammenlagerung von Schädlingen in einer Fangschale zu verhindern.

Diese Aufgabe wird durch die Gegenstände der unabhängigen Patentansprüche gelöst. Bevorzugte Ausführungsformen der vorliegenden Erfindung finden sich in den abhängigen Patentansprüchen sowie in der vorliegenden Beschreibung und in den Zeichnungen.

Ein erster Gegenstand der vorliegenden Erfindung ist eine Vorrichtung zum Immobilisieren von Schädlingen umfassend eine Schale zur Aufnahme einer Flüssigkeit, wobei die Schale einen Boden und Wandungen umfasst, die ein Volumen zur Aufnahme der Flüssigkeit bereitstellen, dadurch charakterisiert, dass der Boden eine Mehrzahl von Vertiefungen aufweist.

Ein weiterer Gegenstand der vorliegenden Erfindung ist ein Verfahren umfassend die Schritte:
- Bereitstellen einer Vorrichtung, wobei die Vorrichtung eine Schale zur Aufnahme einer Flüssigkeit umfasst, wobei die Schale einen Boden und Wandungen umfasst, wobei der Boden und die Wandungen ein Volumen zur Aufnahme der Flüssigkeit bereitstellen, wobei der Boden eine Mehrzahl von Vertiefungen aufweist,
- Befüllen der Schale mit der Flüssigkeit,
- Identifizieren eines in einer Vertiefung der Schale befindlichen Schädlings oder Identifizieren und/oder Zählen einer Mehrzahl an Schädlingen in einer Mehrzahl an Vertiefungen der Schale.

Ein weiterer Gegenstand der vorliegenden Erfindung ist die Verwendung einer Vorrichtung zum Immobilisieren und/oder Identifizieren von Schädlingen, vorzugsweise in einem Bereich, in dem Kulturpflanzen angebaut werden, wobei die Vorrichtung umfasst:
- eine Schale zur Aufnahme einer Flüssigkeit, wobei die Schale einen Boden und Wandungen umfasst, die ein Volumen zur Aufnahme der Flüssigkeit bereitstellen, dadurch charakterisiert, dass der Boden eine Mehrzahl von Vertiefungen aufweist.

Die Erfindung wird nachfolgend näher beschrieben, ohne zwischen den Erfindungsgegenständen (Vorrichtung, Verfahren, Verwendung) zu unterscheiden. Die nachfolgenden Erläuterungen sollen vielmehr für alle Erfindungsgegenstände in analoger Weise gelten, unabhängig davon, in welchem Kontext (Vorrichtung, Verfahren, Verwendung) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die erfindungsgemäße Vorrichtung, ihr Aufbau und ihre Funktionsweise lassen sich besonders anschaulich auf Basis einer Vorrichtung beschreiben, die mindestens eine Flüssigkeit enthält und an einem Ort aufgestellt oder aufgehängt oder anderweitig fixiert ist. Das soll jedoch nicht bedeuten, dass die Erfindung auf eine mit Flüssigkeit befüllte und fixierte Vorrichtung beschränkt ist. Beispielsweise wird eine erfindungsgemäße Vorrichtung als Verkaufsprodukt üblicherweise ohne eine darin bereits enthaltene Flüssigkeit angeboten und die Vorrichtung ist als Verkaufsprodukt üblicherweise nicht bereits an einem Ort fixiert. Dennoch soll ein entsprechendes Verkaufsprodukt durch das vorliegende Schutzrecht geschützt sein. Wenn also bei der Beschreibung und/oder der Definition der erfindungsgemäßen Vorrichtung Bezug auf eine Flüssigkeiten genommen wird, oder die Vorrichtung in einer definierten Lage beschrieben wird, soll der Schutzumfang selbstverständlich auch eine Vorrichtung ohne jegliche Flüssigkeit in jeglicher Lage umfassen.

Die Erfindung dient zum Immobilisieren von Schädlingen. Unter einem "Schädling" wird ein mobiler Organismus verstanden, der beim Anbau von Pflanzen in Erscheinung treten und Pflanzen schädigen oder die Ernte der Pflanzen negativ beeinflussen kann. Vorzugsweise handelt es sich bei dem Schädling um ein Insekt (in den verschiedenen Stadien von Larve (Raupe, Afterraupe) bis zum Adultstadium) oder ein Spinnentier.

Schädlinge müssen in dem Sinne "mobil" sein, dass sie autonom in die Schale der Vorrichtung gelangen können.

Der Begriff "Immobilisieren" bedeutet, dass Schädlinge, die in die Vorrichtung gelangen, diese zumindest für eine gewisse Zeitspanne nicht autonom wieder verlassen können. In der definierten Zeitspanne kann beispielsweise mit Hilfe einer Kamera eine Bildaufnahme oder es können mehrere Bildaufnahmen von den in der Vorrichtung befindlichen Schädlingen erzeugt werden, um die auf den Bildaufnahmen abgebildeten Schädlinge identifizieren und/oder zählen zu können.

Die Vorrichtung weist eine Schale auf, innerhalb der Schädlinge immobilisiert werden. Dies geschieht vorzugsweise mittels einer Flüssigkeit in der Schale. Schädlinge, die in die Flüssigkeit gelangen, können diese üblicherweise nicht mehr autonom verlassen oder werden zumindest für eine gewisse Zeitspanne von der Flüssigkeit festgehalten. Es ist denkbar, dass Schädlinge in der Flüssigkeit ertrinken und/oder von der Flüssigkeit festgehalten werden.

Bei der Flüssigkeit handelt es sich üblicherweise um Wasser. Der Flüssigkeit können ein oder mehrere Zusatzstoffe beigefügt sein. Ein solcher Zusatzstoff kann beispielsweise ein Tensid zur Erniedrigung der Oberflächenspannung sein. Ein solcher Zusatzstoff kann beispielsweise ein Verdickungsmittel zum Erhöhen der Viskosität der Flüssigkeit sein. Ein solcher Zusatzstoff kann auch ein Lockstoff zum Anlocken von (spezifischen) Schädlingen sein. Ein solcher Zusatzstoff kann auch ein Mittel zur Verhinderung von Algenbildung (beispielsweise ein Herbizid) sein. Ein solcher Zusatzstoff kann auch ein Farbstoff sein. Weitere Zusatzstoffe sind denkbar.

Die Schale weist einen Boden und Wandungen auf. Der Boden begrenzt die Schale in eine Raumrichtung ("nach unten"). In die entgegengesetzte Raumrichtung ("nach oben") ist die Schale üblicherweise offen, damit Schädlinge in die Schale gelangen können. Zu den Seiten wird die Schale durch Wandungen begrenzt.

Wird die Schale mit einer Flüssigkeit befüllt, verbleibt die Flüssigkeit in der Schale, da der Boden und die Wandungen ein Herausfließen verhindern.

Wird Flüssigkeit in den Schaleninnenraum eingebracht, definiert das in dem Schaleninnenraum befindliche Flüssigkeitsvolumen einen Sammelbereich, in dem sich Schädlinge sammeln können. Dabei können die Schädlinge auf der Flüssigkeitsoberfläche schwimmen, in dem Flüssigkeitsvolumen schweben und/oder in dem Flüssigkeitsvolumen zum Boden der Schale sinken. Das Volumen des Sammelbereichs wird zu einer Seite durch den Boden der Schale begrenzt, zu weiteren Seiten durch die Wandungen der Schale und zu der offenen Seite der Schale durch die Flüssigkeitsoberfläche.

Eine Schale im Sinne der vorliegenden Erfindung kann beispielsweise die Form eines Zylinders haben, wobei eine der Grundflächen des Zylinders fehlt (ein nach einer Seite offener Zylinder). Eine Schale im Sinne der vorliegenden Erfindung kann beispielsweise die Form eines Kegelstumpfes haben, wobei die Grundfläche des Kegelstumpfes (vorzugsweise diejenige mit der größeren Fläche) fehlt. Eine Schale im Sinne der vorliegenden Erfindung kann beispielsweise die Form eines Quaders haben, wobei eine Grundfläche des Quaders fehlt. Eine Schale im Sinne der vorliegenden Erfindung kann beispielsweise die Form eines Pyramidenstumpfes haben, wobei eine Grundfläche des Pyramidenstumpfes (vorzugsweise diejenige mit der größeren Fläche) fehlt. Weitere Formen, insbesondere Mischformen der genannten Formen sind denkbar.

Es ist denkbar, dass die Schale "nach oben" mit einem Deckel versehen ist, wobei der Deckel eine oder mehrere Öffnungen aufweist, durch die (spezifische) Schädlinge in die Schale gelangen können. Es ist denkbar, dass die Größe von einer solchen Öffnung oder einer Mehrzahl an Öffnungen an die Größe von spezifischen Schädlingen angepasst ist, beispielsweise um gezielt Schädlinge in die Schale gelangen zu lassen, die die Öffnung(en) aufgrund ihrer (geringeren) Größe passieren können, während größere Schädlinge und/oder größere Objekte (z.B. Pflanzenteile oder anderer Schmutz), die aufgrund ihrer Größe die Öffnung(en) nicht passieren können, nicht in die Schale gelangen. Es ist beispielsweise denkbar, dass ein solcher Deckel ein Gitter umfasst, wobei die Gitterabstände eine Größe aufweisen, die das Passieren spezifischer Schädlinge ermöglicht.

Der Boden kann (in der Aufsicht) eine runde, ovale, elliptische, eckige (dreieckig, viereckig, fünfeckig, sechseckig oder allgemein *n*-eckig, mit *n* als ganzer Zahl, die größer oder gleich drei ist) oder eine sonstige Form aufweisen. Vorzugsweise hat der Boden (in der Aufsicht) eine runde oder rechteckige (insbesondere quadratische) Form. Eine rechteckige Form hat den Vorteil, dass die Schale (bzw. der Boden der Schale und/oder die Flüssigkeitsoberfläche einer Flüssigkeit in der Schale) vollflächig auf einem Kamerasensor abgebildet werden kann und der Kamerasensor dabei optimal genutzt wird. Besonders bevorzugt ist daher eine Schale, die ein Seitenverhältnis besitzt, das dem Seitenverhältnis des Kamerasensors entspricht (z.B. 4:3, 3:2, 16:9 oder ein anderes übliches Format). Vorzugsweise sind die Ecken abgerundet. Eine ovale, elliptische oder runde Schale oder eine Schale mit abgerundeten Ecken hat den Vorteil, dass sie sich einfacher säubern lässt als eine Schale mit Ecken.

Vorzugsweise hat der Boden der Schale in der Aufsicht eine ovale, runde, elliptische oder andere Form ohne Ecken. Eine solche Form ohne Ecken erleichtert die Säuberung der Schale.

Der Boden kann, wenn man die Vertiefungen wegdenkt, eben oder gekrümmt sein. Vorzugsweise ist der Boden (wenn man die Vertiefungen wegdenkt) eben ausgeführt. Ein ebener Boden hat den Vorteil, dass alle Bereiche des Bodens scharf auf einer Kamera abgebildet werden können.

Die Wandungen erstrecken sich vorzugsweise konusförmig oder zylinderförmig in einem Winkel zur Bodenfläche im Bereich von 60° bis 120°, vorzugsweise im Bereich von 80° bis 120°, noch mehr bevorzugt im Bereich von 90° bis 110° vom Boden aus, so dass der Boden und die Wandungen einen Raum bilden, der nach einer Seite (nach "oben") offen ist, ansonsten aber durch den Boden und die Wandungen gegenüber der Umwelt abgegrenzt ist. Dieser Raum dient der Aufnahme der Flüssigkeit. Dieser Raum wird in dieser Beschreibung auch als Schaleninnenraum bezeichnet.

Der Boden überspannt in der Aufsicht vorzugsweise eine Fläche von 10 cm² bis 2000 cm², noch mehr bevorzugt von 50 cm² bis 1000 cm².

Der Boden weist eine Vielzahl an Vertiefungen auf. Vorzugsweise erstrecken sich die Vertiefungen über einen Großteil des Bodens, d.h. es gibt mehr Bereiche des Bodens, die Vertiefungen aufweisen als Bereiche des Bodens ohne Vertiefungen. Vorzugsweise erstrecken sich die Vertiefungen über den gesamten Boden, wobei optional lediglich ein Bereich entlang der Wandungen frei von Vertiefungen ist.

Vorzugsweise sind die Vertiefungen so angeordnet, dass sie ein regelmäßiges Muster bilden, beispielsweise ein Dreiecksmuster, ein Quadratgitter, ein Sechseckgitter oder ein anderes Muster. Ein solches Muster kann bei der Scharfstellung der Kamera, der Kooerktur von Objektivfehlern (und/oder anderen Abbildungsfehlern) und/oder bei der Bestimmung der Größe von Schädlingen hilfreich sein. Vorzugsweise sind die Vertiefungen so angeordnet, dass in der Aufsicht eine Parkettierung erkennbar ist. Unter einer Parkettierung wird die lückenlose und überlappungsfreie Überdeckung des Bodens durch gleichförmige Teilflächen bezeichnet. Die Parkette können platonisch oder nicht-platonisch sein. In einer bevorzugten Ausführungsform sind die Parkette platonisch. Beispiele für Parkettierungen sind in den folgenden Publikationen zu finden, deren Inhalt durch Bezugnahme vollständig in diese Beschreibung aufgenommen ist:
http://www.mathematikinformation.info/pdf/MI39Heinrich.pdf
http://www.math.uni-magdeburg.de/reports/2002/parkett.pdf
http://www.willimann.org/A07020-Parkettierungen-Theorie.pdf
http://www.udo-rehle.de/pdf/iv-11c.pdf

In einer bevorzugten Ausführungsform haben die Vertiefungen einen runden Querschnitt und sind in Form eines Sechseckgitters angeordnet. Eine solche Struktur wird auch als Honigwabenstruktur bezeichnet.

Die Vertiefungen haben einen runden, elliptischen, eckigen (beispielsweise dreieckig, viereckig, fünfeckig, sechseckig, siebeneckig, achteckig, oder allgemein *n*-eckig, wobei *n* eine ganze Zahl größer als 2 ist) oder einen sonstigen Querschnitt. Auch Vertiefungen mit verschiedenen Querschnitten (Formen) sind denkbar.

Der Begriff Querschnitt bedeutet in dieser Beschreibung vorzugsweise ein Schnitt in der Ebene des Bodens (ohne Vertiefungen), wenn nichts anderes angegeben ist.

Die Vertiefungen können die Form eines Kugelsegments (auch als Kugelabschnitt bezeichnet), eines Kegelstumpfes, eines Zylinderstumpfes, eines Pymaridenstumpfes, eines Würfels, eines Quaders oder eine sonstige Form aufweisen. Vorzugsweise weisen sie die Form eines Kugelsegments auf, wobei das Volumen des Kugelsegments vorzugsweise kleiner ist als das halbe Volumen der Kugel, von der das Kugelsegment stammt. Vertiefungen, die eine solche Mulden- oder Kuppel-Form aufweisen, lassen sich einfacher reinigen als Vertiefungen mit Ecken und/oder Kanten.

In einer bevorzugten Ausführungsform stellt jede Vertiefung der Mehrzahl von Vertiefungen ein Volumen bereit, das größer ist als das Volumen, das ein spezifischer (definierter) Schädling einnimmt aber kleiner als das Volumen von zwei spezifischen (definierten) Schädlingen. Mit anderen Worten, die Vertiefung ist vorzugsweise so dimensioniert, dass ein spezifischer (definierter) Schädling hineinpasst aber nicht zwei.

Es ist denkbar, dass der spezifische Schädling vollständig in die Vertiefung hineinpasst oder dass der spezifische Schädling mit einem Teil (z.B. einem Großteil) seines Körpers in die Vertiefung hineinpasst, während ein Teil des Körpers über die (ansonsten vorzugsweise ebene) Bodenfläche hinausragt.

Der spezifische (definierte) Schädling kann beispielsweise ein Schädling sein, der an dem Ort, an dem die Vorrichtung im Einsatz ist oder verwendet werden soll, vorkommt. Es ist beispielsweise denkbar, dass die erfindungsgemäße Vorrichtung in einem Feld für spezifische Kulturpflanzen zum Einsatz kommen soll oder dort verwendet wird, um die Anwesenheit eines spezifischen Schädlings für die spezifische Kulturpflanze zu prüfen und/oder zu überwachen.

Ein Beispiel für eine spezifische Kulturpflanze ist Raps; ein Beispiel für einen spezifischen Schädling ist der Rapsstängelrüssler.

Vorzugsweise haben die Vertiefungen eine Ausdehnung im Querschnitt von 2 mm bis 8 mm, noch mehr bevorzugt von 3 mm bis 6 mm.

Vorzugsweise haben die Vertiefungen eine Tiefe von 1 mm bis 5 mm, noch mehr bevorzugt von 1 mm bis 3 mm.

In einer bevorzugten Ausführungsform sind die Vertiefungen so ageordnet und dimensioniert, dass eine oberhalb der Vertiefungen angebrachte Kamera Schädlinge, die sich in den Vertiefungen befinden, erfassen kann, ohne dass es zu signifikanten Schattenwürfen oder Verdeckungen durch die Vertiefungen (insbeosndere im Randbereich in der Nähe der Wandungen) kommt.

In einer bevorzugten Ausführungsform kann die Größe der Vertiefungen variabel gestaltet werden. Es ist beispielsweise denkbar, dass Einlagen (Einsätze) bereitgestellt werden, die in die Schale eingebracht werden und für eine Mehrzahl an Vertiefungen sorgen. Es ist beispielsweise denkbar, dass Gittereinsätze mit quadratischen Aussparungen verwendet werden, die unterschiedliche Gitterabstände aufweisen, beispielsweise ein Gitter mit einem Gitterabstand von 3 mm, ein weiteres Gitter mit einem Abstand von 4 mm und ein weiteres Gitter mit einem Gitterabstand von 6 mm. Auch andere Gitterabstände sind denkbar. Die Gitter können auch runde, elliptische, ovale, *n*-eckige Aussparungen aufweisen, wobei *n* eine ganze Zahl größer als 2 ist. Auch andere Formen sind denkbar. Die Gitter können einseitig geschlossen oder beidseitig geöffnet sein.

Auch die Tiefe der Mehrzahl an Vertiefungen kann durch Einlagen (Einsätze) variabel gestaltet werden. Es ist beispielsweise denkbar, dass es einen Gittereinsatz gibt, der eine Höhe von 1 mm aufweist, einen weiteren Gittereinsatz, der eine Höhe von 1,5 mm aufweist und einen weiteren Gittereinsatz, der eine Höhe von 2 mm aufweist. Weitere Höhen sind denkbar.

Die Einlagen/Einsätze sind selbstverständlich nicht auf Gitter beschränkt. So ist es denkbar, dass ein Honigwabenstruktureinsatz bereitgestellt wird, der runde Vertiefungen oder Aussparungen in einer Anordnung eines Sechseckgitters aufweist. Auch eine quadratische Anordnung von runden Vertiefungen oder Aussparungen (oder Vertiefungen/Aussparungen anderer Formen) ist denkbar.

Die Einlagen/Einsätze können einseitig (nach "unten" )verschlossen und einseitig (nach "open") geöffnet oder beidseitig (nach "unten" und nach "oben") geöffnet sein.

Neben der erhöhten Variabilität bei der Vereinzelung von Schädlingen weisen solche Einlagen/Einsätze den Vorteil auf, dass sie sich nach Herausnahme aus der Schale einfacher reinigen lassen als Vertiefungen, die permanent in den Boden eingebracht sind.

Wird Flüssigkeit in den Schaleninnenraum eingebracht, definiert das in dem Schaleninnenraum befindliche Flüssigkeitsvolumen einen Sammelbereich, in dem sich Schädlinge sammeln können. Die Vertiefungen sorgen dafür, dass sich die Schädlinge in den Vertiefungen ablagern, wobei üblicherweise nicht mehr als ein Schädling in einer Vertiefung abgelagert wird. Eine Ansammlung wird reduziert oder ganz vermieden.

Vorzugsweise wird eine Menge an Flüssigkeit in die Schale eingebracht, die dazu führt, dass der kürzeste Abstand der Flüssigkeitsoberfläche zu einem Teil des Bodens, der keine Vertiefung aufweist, geringer ist, als die Tiefe der Vertiefungen.

Es ist denkbar, dass die Flüssigkeit in der erfindungsgemäßen Vorrichtung zu definierten Zeitpunkten in Bewegung versetzt wird. Eine solche Bewegung fördert die Verteilung von Schädlingen in der Flüssigkeit der Schale auf einzelne Vertiefungen und deren Vereinzelung, so dass jede Vertiefung nicht mehr als einen Schädling umfasst. Eine solche Bewegung kann beispielsweise durch einen Schwimmer auf der Oberfläche der Flüssigkeit erzeugt werden, der zum Beispiel mit Hilfe eines Motors oder eines Hubkolbens eine oder mehrere Bewegungen auf der Flüssigkeitsoberfläche ausführt, die zur Erzeugung einer oder mehrerer Wellen führt. Denkbar ist auch, dass die Wandungen oder der Boden angestoßen werden oder dass die Schale eine horizontale Bewegung oder eine Kippbewegung oder dergleichen vollzieht.

Die erfindungsgemäße Vorrichtung wird zur erfindungsgemäßen Verwendung üblicherweise an einem Ort aufgestellt, aufgehängt oder anderweitig fixiert. Dabei wird die Vorrichtung so ausgerichtet, dass sich der vorzugsweise ebene Boden der Schale (wenn man die Vertiefungen wegdenkt) vorzugsweise horizontal, d.h. parallel zum ebenen Untergrund erstreckt. Anders ausgedrückt: die Flächennormale (das senkrecht Lot zur ebenen Bodenfläche der Schale) weist in Richtung des Erdmittelpunktes.

In einer bevorzugten Ausführungsform umfasst die erfindungsgemäße Vorrichtung mindestens eine Kamera und/oder mindestens eine Halterung für mindestens eine Kamera.

Mit einer solchen Kamera können digitale Bildaufnahmen erzeugt werden. Eine solche Kamera umfasst einen Bildsensor (Kamerasensor) und optische Elemente. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD-(CCD = *charge-coupled device*) oder CMOS-Sensoren (CMOS = *complementary metal-oxide-semiconductor*). Die optischen Elemente (Linsen, Blenden und dergleichen) dienen einer möglichst scharfen Abbildung des Objektes, von dem eine digitale Bildaufnahme erzeugt werden soll, auf dem Bildsensor.

Die mindestens eine Halterung und/oder die mindestens eine Kamera ist/sind so positioniert, dass der gesamte Sammelbereich oder zumindest ein Teil des Sammelbereichs auf dem mindestens einen Bildsensor abgebildet wird. Es ist denkbar, mehrere Kameras zu verwenden, die verschiedene Bereiche des Sammelbereichs auf dem jeweiligen Bildsensor abbilden. Bei einer solchen Verwendung mehrerer Kameras ist es vorteilhaft, wenn sich die abgebildeten Bereiche zumindest teilweise überlappen, um aus den einzelnen Bildaufnahmen zu einem späteren Zeitpunkt einfacher ein Gesamtbild erzeugen zu können.

An der mindestens einen Halterung lässt sich mindestens eine Kamera vorzugsweise reversibel fixieren. Die mindestens eine Halterung befindet sich vorzugsweise in einem definierten und gleichbleibenden Abstand zum Sammelbereich und gewährleistet damit einen definierten und gleichbleibenden Abstand zwischen dem mindestens einen Bildsensor und dem Sammelbereich.

Es ist denkbar, dass die erfindungsgemäße Vorrichtung mit mindestens einer Quelle für elektromagnetische Strahlung, vorzugsweise im sichtbaren, infraroten und/oder ultravioletten Bereich des Spektrums ausgestattet ist. Mit einer solchen Quelle für elektromagnetische Strahlung kann der Sammelbereich ausgeleuchtet werden, so dass digitale Bildaufnahmen gleichbleibender Qualität unabhängig vom Sonnenlicht (also beispielsweise auch nachts) erzeugt werden können.

Die von der mindestens einen Kamera erzeugten digitalen Bildaufnahmen von dem Sammelbereich können durch einen Experten oder durch ein selbstlernendes System analysiert werden, um zu entscheiden, ob sich in dem Sammelbereich ein Schädling befindet und um ein in dem Sammelbereich befindlichen Schädling zu zählen und/oder zu identifizieren. Einzelheiten hierzu sind beispielsweise in den folgenden Publikationen enthalten: WO2020058170, WO2020058175, WO2018054767, KR1020100127473, WO0217119, O. Lopez et al.: Monitoring Pest Insect Traps by Means of Low-Power Image Sensor Technologies; Sensors 2012, Bd. 12 Nr. 12 Seiten 15801-15819.

In einer bevorzugten Ausführungsform weist die erfindungsgemäße Vorrichtung eine Energieversorgung auf, zum Beispiel, um eine vorhandene Kamera und/oder vorhandene Mittel zur Erzeugung von Wellen in der Flüssigkeit der Schale zur Vereinzelung der Schädlinge und/oder eine vorhandene Steuer- und Kontrolleinheit mit elektrischer Energie zu versorgen. Bei der Energieversorgung kann es sich beispielsweise um eine elektrochemische Zelle (Batterie), einen wiederaufladbaren Akkumulator, ein Solarpanel, eine Brennstoffzelle, ein Windrad mit einen Generator und/oder um eine andere Quelle für elektrische Energie oder um eine Kombination der genannten Einheiten handeln.

Vorzugsweise weist die erfindungsgemäße Vorrichtung Mittel auf, mit der die Vorrichtung auf einem Boden oder in einem Boden stationiert werden kann. Vorzugsweise lässt sich die Vorrichtung in dem Boden befestigen, um ein Umstürzen zum Beispiel bei Sturm zu verhindern. Vorzugsweise sind Mittel vorhanden, mit denen der Abstand zwischen Boden und Sammelbereich variiert werden kann. Ein Beispiel einer solchen Höhenverstellung ist ein Teleskopstab, der mit einem Ende im Boden befestigt werden kann und an dessen anderem

Ende der Sammelbereich angebracht werden kann. Ein anderes Beispiel einer Höhenverstellung ist eine Hebebühne. Eine solche variable Höhenverstellung ermöglicht es, den Sammelbereich oberhalb von Pflanzen zu positionieren, so dass Fluginsekten den Sammelbereich bei einem Überflug über die Pflanzen erkennen können. Die variable Höhenverstellung erlaubt ein Anpassen der Höhe des Sammelbereichs (Abstand zum Boden) an die wachsenden Pflanzen, um zu verhindern, dass die umgebenden Pflanzen den Sammelbereich verdecken. In einer bevorzugten Ausführungsform erfolgt die Höhenverstellung automatisch; sie ist jedoch auch manuell möglich. Die Höhe passt sich automatisch vorzugsweise so an, dass der Sammelbereich stets oberhalb oder auf der Höhe der umgebenden Pflanzen liegt. Dies kann durch Abstandssensoren und/oder Helligkeitssensoren bewerkstelligt werden.

Es ist aber auch denkbar, dass die erfindungsgemäße Vorrichtung über Mittel verfügt, mit denen sie an einer Pflanze oder einem anderen Gegenstand befestigt werden kann, wie beispielsweise mittels eines Hakens oder einer Schlinge oder einem Gurt zum Befestigen an einem Ast oder Zweig oder Stamm.

In einer bevorzugten Ausführungsform weist die erfindungsgemäße Vorrichtung eine Sendeeinheit auf, mit der Kameraaufnahmen an ein separates Computersystem übermittelt werden können. Diese Übermittlung kann beispielsweise über ein Netzwerk wie beispielsweise das Mobilfunknetz erfolgen.

Die erfindungsgemäße Vorrichtung kann weitere Merkmale aufweisen, insbesondere Merkmale, die in der Offenlegung WO2020058170 und/oder der Offenlegung WO2020058175 beschrieben sind. Die genannten Offenlegungen sind hiermit per Bezugnahme vollständig in diese Beschreibung aufgenommen.

Die Erfindung wird nachfolgend anhand von Zeichnungen näher erläutert, ohne die Erfindung auf die in den Zeichnungen gezeigten Merkmale und Merkmalskombinationen beschränken zu wollen.

Es zeigen:
Fig. 1 zeigt beispielhaft und schematisch eine Ausführungsform der erfindungsgemäßen Vorrichtung (a) in der Aufsicht, (b) im Querschnitt von einer Seite und (c) in einer vergrößerten Darstellung.
Fig. 2 zeigt beispielhaft und schematisch eine Ausführungsform eines Bodens der erfindungsgemäßen Vorrichtung (a) in der Aufsicht und (b) im Querschnitt von einer Seite.
Fig. 3 zeigt beispielhaft und schematisch eine Ausführungsform eines Bodens der erfindungsgemäßen Vorrichtung (a) in der Aufsicht und (b) im Querschnitt von einer Seite.
Fig. 4 zeigt beispielhaft und schematisch eine Ausführungsform eines Einsatzes für eine erfindungsgemäße Vorrichtung (a) in der Aufsicht und (b) im Querschnitt von einer Seite.
Fig. 5 zeigt beispielhaft und schematisch eine Ausführungsform der erfindungsgemäßen Vorrichtung (a) in der Aufsicht, (b) im Querschnitt von einer Seite und (c) in einer vergrößerten Darstellung.
Fig. 6 zeigt beispielhaft und schematisch eine Ausführungsform der erfindungsgemäßen Vorrichtung im Querschnitt von einer Seite.

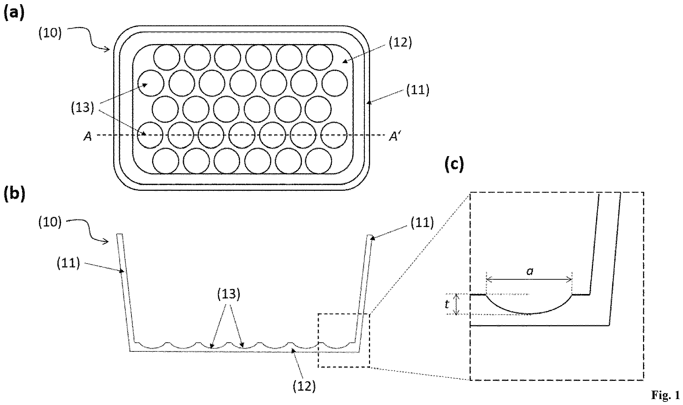

Fig. 1 (a) zeigt eine erfindungsgemäße Vorrichtung in der Aufsicht (von "oben"). Die Vorrichtung (10) umfasst Wandungen (11) und einen Boden (12), die zusammen eine Schale bilden. Der Boden (12) hat die Form eines Rechtecks mit abgerundeten Ecken. In den Boden (12) sind Vertiefungen (13) eingebracht. Die Vertiefungen bilden das regelmäßige Muster einer Honigwabenstruktur. Fig. 1 (b) zeigt die Vorrichtung im Querschnitt entlang der gestrichelten Linien *A-A*' von der Seite. Die Wandungen (11) erstrecken sich in einem Winkel von mehr als 90° vom Boden (12) aus in die Höhe. Fig. 1 (c) zeigt einen Ausschnitt aus Fig. 1 (b) in einer vergrößerten Darstellung. Die Vertiefungen (13) haben die Form eines Kugelsegments. In der Ebene des Bodens (12) haben die Vertiefungen (13) eine runde Form mit dem Durchmesser a. Die Vertiefungen (13) haben eine Tiefe t.

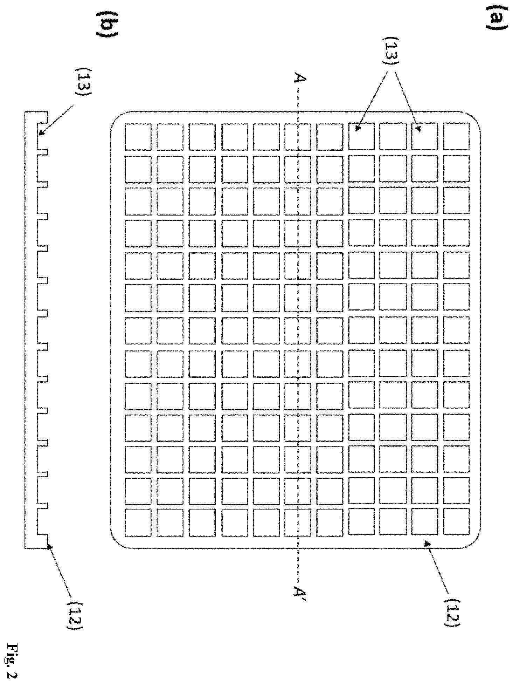

Fig. 2 (a) zeigt eine weitere Ausführungsform des Bodens einer erfindungsgemäßen Vorrichtung in der Aufsicht (von "oben"). In den Boden (12) sind Vertiefungen (13) eingebracht. Die Vertiefungen (13) haben die Form von Quadern. Die Vertiefungen (13) bilden ein regelmäßiges quadratisches Muster. Fig. 2 (b) zeigt den Boden (12) im Querschnitt entlang der *A-A*' von der Seite.

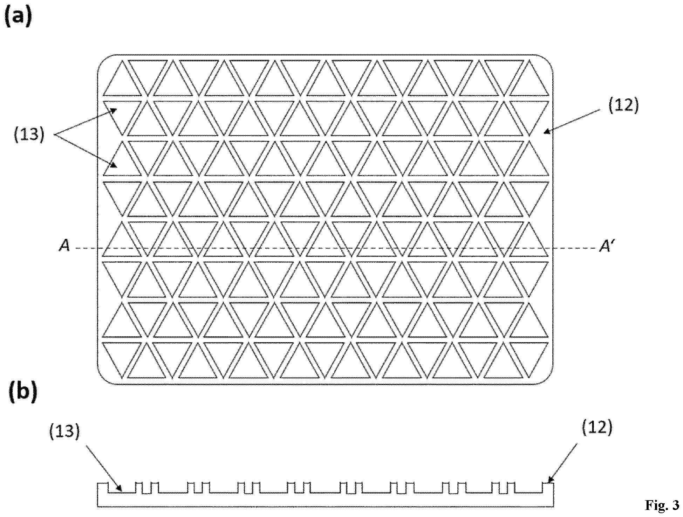

Fig. 3 (a) zeigt eine weitere Ausführungsform des Bodens einer erfindungsgemäßen Vorrichtung in der Aufsicht (von "oben"). In den Boden (12) sind Vertiefungen (13) eingebracht. Die Vertiefungen (13) haben die Form von Zylindern mit einer dreieckigen Grundform. Die Vertiefungen (13) bilden ein regelmäßiges hexagonales Muster. Fig. 3 (b) zeigt den Boden (12) im Querschnitt entlang der *A-A*' von der Seite.

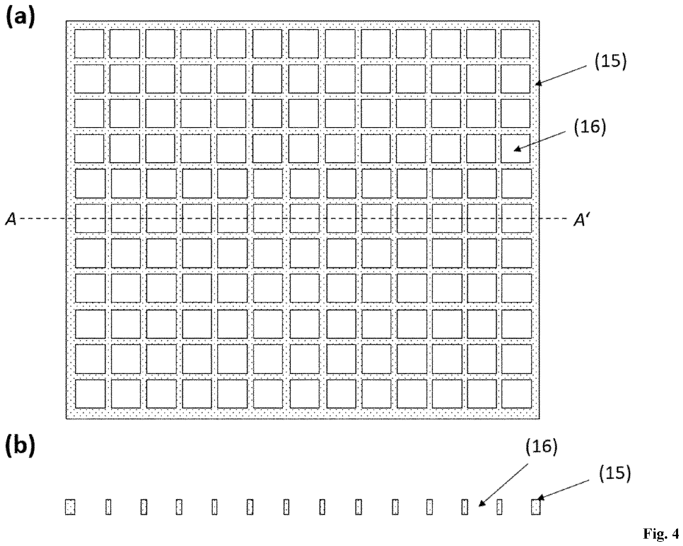

Fig. 4 (a) zeigt eine Ausführungsform eines Einsatzes für eine erfindungsgemäße Vorrichtung in der Aufsicht (von "oben"). Der Einsatz besteht aus einem ebenen, quaderförmigen Körper (15), in den Aussparungen (16) eingebracht sind, so dass sich ein Gitter ergibt. Die Aussparungen (16) sind quaderförmig und bilden ein regelmäßiges quadratisches Muster. Fig. 4 (b) zeigt den Körper (15) mit den Aussparungen (16) im Querschnitt entlang der *A-A*' von der Seite.

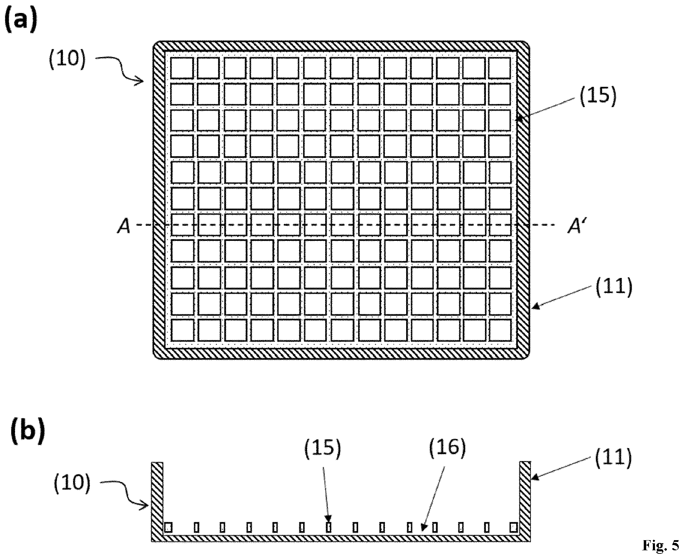

Fig. 5 (a) zeigt den Einsatz auf Fig. 4, der in einer Schale eingebracht ist, in der Aufsicht (von "oben"). Im vorliegenden Beispiel ist der Einsatz in die Schale eingelegt worden. Fig. 5 (b) zeigt die Schale mit Einsatz im Querschnitt entlang der *A-A*' von der Seite. Durch den Einsatz entsteht in der Schale ein Boden mit Vertiefungen. Der Boden wird durch den Körper (15) gebildet, die Vertiefungen durch die Aussparungen (16).

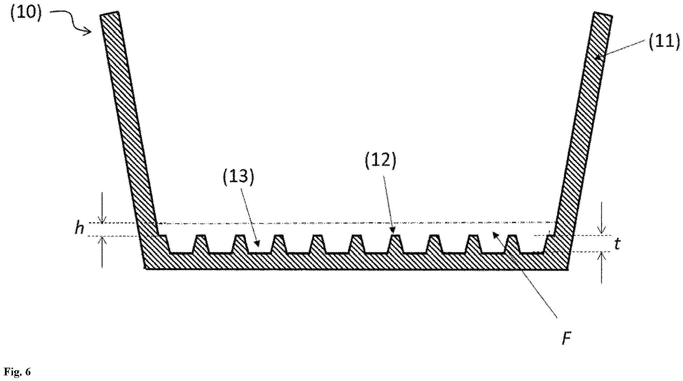

Fig. 6(a) zeigt eine Vorrichtung umfassend Wandungen (11) und einen Boden (12) mit Vertiefungen (13), die zusammen eine Schale bilden. In die Vorrichtung ist eine Flüssigkeit *F* eingebracht. Die Flüssigkeit F bildet eine Flüssigkeitsoberfläche (dargestellt durch eine Linie aus Strichen und Punkten). Der kürzeste Abstand h der Flüssigkeitsoberfläche von einem Teil des Bodens (12) der keine Vertiefung aufweist, ist kleiner als die Tiefe der Vertiefungen (13).

## Patentansprüche

1. Vorrichtung zum Immobilisieren von Schädlingen umfassend eine Schale zur Aufnahme einer Flüssigkeit, wobei die Schale einen Boden und Wandungen umfasst, die ein Volumen zur Aufnahme der Flüssigkeit bereitstellen, dadurch charakterisiert, dass der Boden eine Mehrzahl von Vertiefungen aufweist.

2. Vorrichtung gemäß Anspruch 1, wobei ein Großteil des Bodens Vertiefungen aufweist.

3. Vorrichtung gemäß einem der Ansprüche 1 oder 2, wobei sich die Vertiefungen über den gesamten Boden erstrecken, wobei optional Bereiche des Bodens, die an die Wandungen angrenzen, frei von Vertiefungen sind.

4. Vorrichtung gemäß einem der Ansprüche 1 bis 3, wobei die Vertiefungen in einem regelmäßigen Muster angeordnet sind.

5. Vorrichtung gemäß einem der Ansprüche 1 bis 4, wobei die Vertiefungen eine platonische Parkettierung bilden.

6. Vorrichtung gemäß einem der Ansprüche 1 bis 5, wobei die Vertiefungen die Form einer Honigwabenstruktur bilden.

7. Vorrichtung gemäß einem der Ansprüche 1 bis 6, wobei jede Vertiefung ein Volumen aufweist, das einen spezifischen Schädling ganz oder teilweise aufnimmt, jedoch keine zwei spezifischen Schädlinge aufnimmt.

8. Vorrichtung gemäß einem der Ansprüche 1 bis 7, wobei jede Vertiefung in der Ebene des Bodens eine Ausdehnung von minimal 2 mm und maximal 8 mm aufweist.

9. Vorrichtung gemäß einem der Ansprüche 1 bis 8, wobei jede Vertiefung eine Tiefe von 1 mm bis 5 mm aufweist.

10. Vorrichtung gemäß einem der Ansprüche 1 bis 9, wobei der Boden mit den Vertiefungen durch einen Einsatz gebildet wird, der reversibel aus der Schale entfernt werden kann.

11. Vorrichtung gemäß einem der Ansprüche 1 bis 10, ferner umfassend Mittel, die zu definierten Zeitpunkten einen oder mehrere Impulse auf die Wandungen und/oder den Boden abgeben.

12. Vorrichtung gemäß einem der Ansprüche 1 bis 10, ferner umfassend eine Kamera mit einem Bildsensor, wobei der Bildsensor eine rechteckige Form mit einem Seitenverhältnis aufweist, wobei die Schale in der Aufsicht eine rechteckige Form aufweist, wobei die Ecken vorzugsweise abgerundet sind, wobei die rechteckige Form der Schale ein Seitenverhältnis aufweist, das dem Seitenverhältnis des Bildsensors der Kamera entspricht.

13. Verfahren umfassend die Schritte:
- Bereitstellen einer Vorrichtung gemäß einem der Ansprüche 1 bis 12,
- Befüllen der Schale mit der Flüssigkeit,
- Identifizieren eines in einer Vertiefung der Schale befindlichen Schädlings oder Identifizieren und/oder Zählen einer Mehrzahl an Schädlingen in einer Mehrzahl an Vertiefungen der Schale.

14. Verfahren gemäß Anspruch 13, wobei die Schale mit einer Menge an Flüssigkeit befüllt wird, die dazu führt, dass der kürzeste Abstand der Flüssigkeitsoberfläche zu einem Teil des Bodens der keine Vertiefung aufweist, geringer ist als die Tiefe der Vertiefungen.

15. Verwendung einer Vorrichtung gemäß einem der Ansprüche 1 bis 12 zum Immobilisieren und/oder Identifizieren von Schädlingen, vorzugsweise in einem Bereich, in dem Kulturpflanzen angebaut werden.
